# DEMANDE DE BREVET EUROPEEN

(11) **EP 4 345 304 A1**
(43) Date de publication de la demande: **03.04.2024**
(21) Numéro de dépôt: 22306449.4
(22) Date de dépôt: 29.09.2022
(51) Int. Cl.: F03G 3/00, F03B 17/02

(54) **INSTALLATION DE STOCKAGE MÉCANIQUE D'ÉNERGIE ET DE GÉNÉRATION D'ÉLECTRICITÉ ET PROCÉDÉ ASSOCIÉ**

(71) Demandeur: Reinertz, Roger, 92120 Montrouge (FR)
(72) Inventeur: Reinertz, Roger, 92120 Montrouge (FR)
(74) Mandataire: Tranvouez, Edern Morgan

(57) **Abrégé**

La demande concerne une installation de stockage mécanique d'énergie et de génération d'électricité (1) comprenant : au moins un volant d'inertie (10) ; au moins une colonne de liquide (20); un ensemble lest/sac (30), disposé dans la colonne de liquide (20) ; et au moins un système d'insufflation de gaz (40) configuré pour insuffler du gaz dans le sac à gaz (32) lorsque l'ensemble lest/sac (30) atteint une portion inférieure de la colonne de liquide (20). Le système d'insufflation (40) comprend un turbo à gaz (41) entraîné en rotation par le volant d'inertie (10) et configuré pour fournir un flux de gaz ; une unité de chauffage (42) configurée pour élever la température du flux de gaz fourni par le turbo à gaz (41) et au moins un mécanisme d'insufflation de gaz (43).

## Description

### Domaine technique

L'invention concerne le domaine de la production d'électricité et notamment celui de la production d'électricité renouvelable.

L'invention a ainsi plus particulièrement pour objet une installation de stockage mécanique d'énergie et de génération d'électricité et procédé de génération d'électricité sur demande à partir d'au moins une source d'énergie intermittente en mettant en œuvre une telle installation.

### État de l'art antérieur

La production d'énergie renouvelable est généralement liée à des phénomènes naturels intermittents, tels que la lumière solaire, le vent, ou encore les marées, et est donc par nature intermittente. Afin de pallier cette intermittence, il est généralement nécessaire de faire appel à des systèmes de stockage chimique, que sont les batteries, qui se chargent pendant les cycles de production d'énergie et qui rendent l'énergie stockée pendant les cycles de non-production.

Néanmoins, de tels système de stockage ne sont pas totalement appropriés puisqu'ils sont sujet à une détérioration de leur capacité dans le temps et que leur fabrication et leur recyclage sont particulièrement polluants. Ainsi, il y aurait un intérêt à fournir des systèmes de stockage d'énergie qui soient plus respectueux de l'environnement et durable.

### Exposé de l'invention

L'invention vise à remédier aux inconvénients mentionnés ci-dessus et a ainsi pour objet de fournir un stockage d'énergie qui soit plus respectueux de l'environnement que les batteries chimiques actuellement associées utilisées pour palier la fourniture d'énergie intermittente liée à la production d'énergie renouvelable.

L'invention concerne à cet effet une installation de stockage mécanique d'énergie et de génération d'électricité comprenant :
- au moins un volant d'inertie apte à être entraîné en rotation par une source d'énergie extérieure à l'installation,
- au moins une colonne de liquide,
- au moins un ensemble comprenant un lest et un sac à gaz, ci-après ensemble lest/sac, disposé dans la colonne de liquide et agencé de telle manière à ce que la chute du lest dans la colonne de liquide entraine en rotation le volant d'inertie, le sac à gaz étant configuré pour relâcher un gaz qui y est stocké lorsque l'ensemble lest/sac atteint une portion supérieure de la colonne de liquide,
- au moins un système d'insufflation de gaz au moins partiellement agencé dans la colonne de liquide et qui est configuré pour insuffler du gaz dans le sac à gaz lorsque l'ensemble lest/sac atteint une portion inférieure de la colonne de liquide,
- un générateur d'électricité susceptible d'être entrainé en rotation par le volant d'inertie pour générer de l'électricité,
dans lequel le système d'insufflation comprend :
- un turbo à gaz entraîné en rotation par le volant d'inertie et configuré pour fournir un flux de gaz,
- une unité de chauffage configurée pour élever la température du flux de gaz fourni par le turbo à gaz,
- un mécanisme d'insufflation de gaz configuré pour insuffler le flux de gaz chauffé dans le sac à gaz lorsque l'ensemble lest/sac atteint une portion inférieure de la colonne de liquide.

Une telle installation permet un stockage d'énergie à partir du volant d'inertie avec un auto-entretien au moins partiel par l'utilisation de la chute de l'ensemble lest/ sac. Cet auto-entretient est obtenu avec comme apport d'énergie celle utilisée pour gonfler le sac à gaz au fond de la colonne de liquide et obtenir une remontée de l'ensemble lest/ sac à partir de la poussée d'Archimède. Or cet apport est particulièrement optimisé dans le cadre de l'invention puisqu'il est basé sur l'utilisation d'une combinaison de turbo à gaz entrainé par le volant d'inertie et une unité de chauffage potentiellement fournie par un système de récupération d'énergie. De ce fait, l'installation selon l'invention permet de stocker sous forme mécanique (la rotation du volant d'inertie) l'énergie fournie par une source d'énergie intermittente, préférentiellement de type renouvelable, pour permettre de la fournir lorsqu'elle est requise par le réseau. Du fait de l'auto-entretien permis par l'ensemble lest/sac et le système d'insufflation, le stockage mécanique est particulièrement optimisé et pérenne et permet ainsi de compenser l'intermittence de fourniture d'énergie liée aux sources d'énergie renouvelable.

On notera, de plus, que l'installation étant basée sur des phénomènes physiques non intermittents, à savoir l'inertie du volant d'inertie, l'énergie potentiel de gravité et la poussée d'Archimède, accessibles partout dans le monde, elle ne présente aucune restriction concernant le lieu à équiper et son utilisation, l'électricité générée par l'installation pouvant être délivrée sur demande et n'étant pas soumise aux intermittences inhérentes aux sources d'énergie renouvelable qui sont susceptibles d'alimenter l'installation. On notera également que l'installation selon l'invention peut également être mise en œuvre afin de permettre de réguler les pics et les creux de consommation d'électricité dans le cas d'une production d'énergie constante, telle que c'est le cas pour les centrales nucléaires.

Un turbo à gaz comprend généralement un compresseur centrifuge qui permet, dans le cadre de la présente invention, par la rotation transmise par le volant d'inertie, de fournir une flux gaz destiné à être insuffler dans le sac à gaz.

Le système d'insufflation peut comprend en outre un réservoir pour recevoir le flux de gaz et le stocker avant d'être insufflé par le mécanisme d'insufflation de gaz et dans lequel l'unité de chauffage est configurée pour élever la température du gaz stocké dans le réservoir qui est formé par le flux de gaz.

Un tel réservoir permet de s'assurer une réserve de gaz pressurisé afin de permettre de gonfler rapidement le sac à gaz et ainsi permettre à l'ensemble lest/sac de passer de la portion inférieure à la portion supérieure de la colonne de liquide.

L'unité de chauffage peut comprendre un échangeur thermique, tel qu'un échangeur thermique gaz/liquide.

Un tel échangeur thermique permet de transférer efficacement de la chaleur récupérée d'une autre source de chaleur à partir d'un liquide caloporteur. Ainsi, dans le cas où l'installation selon l'invention est installée à proximité d'une installation d'incinération ou d'une usine générant une grande quantité de chaleur, telle qu'une fonderie, il sera possible de transférer de la chaleur de cette installation ou usine au gaz afin d'augmenter la pression exercée par le flux de gaz.

Le volant d'inertie peut être logé dans une enceinte sous vide au moins industriel, voire un vide primaire.

Avec un tel vide, on limite les pertes aux frottements et aux turbulences que peut générer le déplacement du volant d'inertie. De ce fait, on augmente d'autant la pérennité du stockage d'énergie sous forme mécanique permis par l'invention.

La colonne de liquide peut présenter un emplacement à section réduite, ledit emplacement à section réduite étant agencé dans la portion inférieure de la colonne de liquide et étant destiné à recevoir l'ensemble lest/sac à la fin de sa chute.

Un tel emplacement à section réduite permet d'amortir la chute de l'ensemble lest/sac sur la fin de sa chute. On limite ainsi les risques d'endommagement de la colonne et des éléments de l'installation tels que le mécanisme d'insufflation de gaz, qui pourrait résulter de la chute de l'ensemble lest/sac si ce dernier pénétrait dans la portion inférieure sans amortissement.

L'invention concerne en outre un procédé de génération d'électricité sur demande à partir d'au moins une source d'énergie mettant en œuvre une Installation de stockage mécanique d'énergie et de génération d'électricité selon l'invention, le procédé comprenant les étapes suivantes :
- utilisation de la source d'énergie intermittente en tant que source d'énergie extérieure pour entraîner au moins en partie en rotation le volant à inertie,
- génération d'électricité à partir du générateur d'électricité entrainé en rotation par le volant à inertie.

Un tel procédé permet de bénéficier du stockage d'énergie permis par l'invention pour obtenir une délivrance d'électricité sur demande à partir de sources d'énergie qui sont intermittentes et ainsi de s'exonérer des inconvénients liés à de telles sources d'énergie.

La source d'énergie intermittente peut comprendre une source d'énergie renouvelable préférentiellement sélectionnée dans le groupe comprenant les sources d'énergie solaire, les sources d'énergie éolienne, les sources d'énergie marémotrice et les sources d'énergie hydrolienne.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre schématiquement une installation de stockage mécanique d'énergie et de génération d'électricité selon un premier mode de réalisation de l'invention,
- la figure 2 illustre schématiquement un exemple d'emplacement à section réduite susceptible d'être utilisé dans le cadre d'une possibilité avantageuse de l'invention,
- la figure 3 illustre schématiquement un ensemble lest/sac susceptible d'être mis en œuvre dans le cadre de la présente invention,
- la figure 4 illustre schématiquement une installation de stockage mécanique d'énergie et de génération d'électricité selon un deuxième mode de réalisation basé sur l'utilisation de deux ensembles lest/sac à mouvement antagoniste
- la figure 5 illustre schématiquement et en vue rapprochée une variante du deuxième mode de réalisation dans laquelle les deux ensembles lest/sac sont reliés au même câble ceci de manière à ce que le câble soit toujours entraîné par l'ensemble lest/sac qui descend et donc d'éviter la nécessité d'un système de rembobinage.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

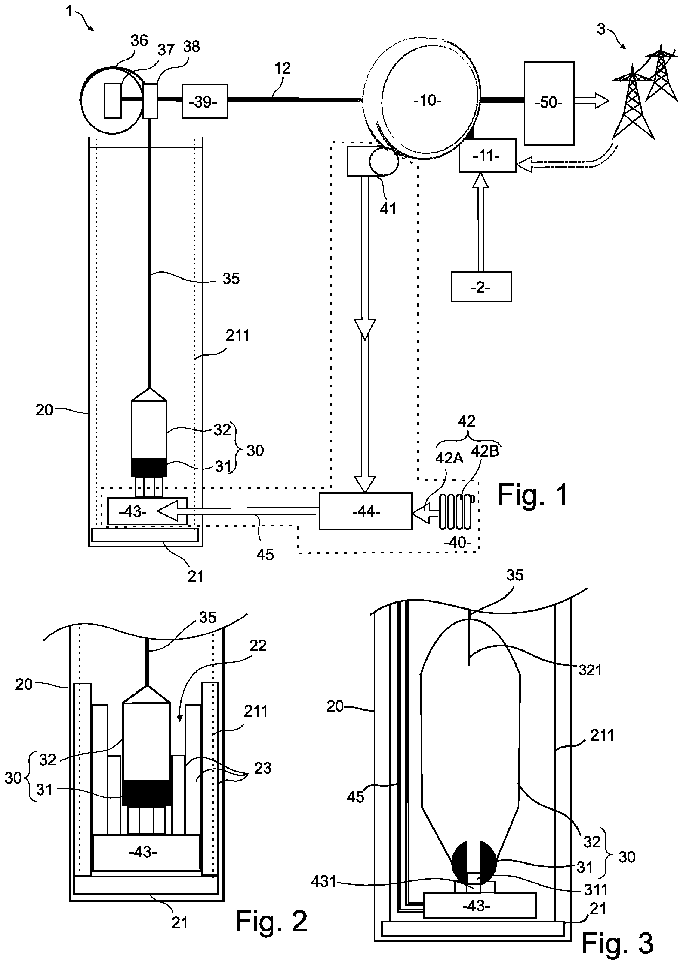

La figure 1 illustre une installation de stockage mécanique d'énergie et de génération d'électricité 1 selon l'invention adaptée pour stocker de l'énergie sous forme mécanique, cette énergie pouvant être issue d'une source d'énergie intermittente, et pour générer de l'électricité à la demande.

Comme montrée sur cette figure, une telle installation de stockage mécanique d'énergie et de génération d'électricité 1 comprend :
- au moins un volant d'inertie 10 apte à être entraîné en rotation par une source d'énergie extérieure 2 à l'installation,
- une colonne de liquide 20, ladite colonne de liquide 20 étant, dans le présent mode de réalisation une colonne d'eau,
- un ensemble 30 comprenant un lest 31 et un sac à gaz 32, ci-après ensemble lest/sac 30, disposé dans la colonne de liquide 20 et agencé de telle manière à ce que la chute du lest 31 dans la colonne de liquide entraine en rotation le volant d'inertie 10, le sac à gaz 32 étant configuré pour relâcher un gaz qui y est stocké lorsque l'ensemble lest/sac 30 atteint une portion supérieure de la colonne de liquide 20,
- au moins un système d'insufflation de gaz 40 au moins partiellement agencé dans la colonne de liquide 20 et qui est configuré pour insuffler du gaz dans le sac à gaz 32 lorsque l'ensemble lest/sac 30 atteint une portion inférieure de la colonne de liquide 20,
- un générateur d'électricité 50 susceptible d'être entrainé en rotation par le volant d'inertie 10 pour générer de l'électricité.
le système d'insufflation 40 comprend :
- un turbo à gaz 41 entraîné en rotation par le volant d'inertie 10 et configuré pour fournir un flux de gaz,
- un réservoir 44 pour recevoir le flux d'air et le stocker avant d'être insufflé par un mécanisme d'insufflation de gaz 43,
- une unité de chauffage 42 configurée pour élever la température du gaz stocké dans le réservoir 44,
- un mécanisme d'insufflation de gaz 43 configuré pour insuffler le gaz chauffé et stocké dans le réservoir 44, en tant que flux de gaz, dans le sac à gaz 32 lorsque l'ensemble lest/sac 30 atteint une portion inférieure de la colonne de liquide 20.

Selon une caractéristique avantageuse de l'invention, non montrée, le volant d'inertie 10 peut être agencé sous vide afin de limiter les pertes liées aux frottements et aux turbulences que peut générer le déplacement du volant d'inertie 10. Le volant d'inertie 10 peut ainsi être agencé sous un vide au moins industriel, c'est-à-dire compris entre la pression atmosphérique, c'est-à-dire environ 100.000 Pa, et 100 Pa ou, de manière préférentielle, un vide au moins primaire, c'est-à-dire compris entre 100 Pa et 0,1 Pa.

Afin de permettre son entraînement, le volant d'inertie 10 peut être entrainé, par exemple au moyen d'une roue libre, par un moteur 11 alimenté électriquement par une source d'énergie extérieure 2. Conformément à l'invention, cette source d'énergie extérieure 2 est préférentiellement une source d'énergie renouvelable, par essence intermittente. Cette source d'énergie extérieure 2 peut ainsi, par exemple, et de manière non limitative, être des panneaux photovoltaïques, des éoliennes, des hydroliennes ou encore des installations marémotrices. On notera que, selon une possibilité de l'invention illustrée sur la figure 1, afin d'initialiser l'installation, c'est-à-dire commencer à mettre en mouvement le volant d'inertie 10, ou de permettre un stockage de surproduction d'électricité du réseau, le moteur 11 peut également être relié à un réseau de distribution d'électricité 3.

Le volant d'inertie 10 est également entraîné en rotation par la chute de l'ensemble lest/sac 30 le long de la colonne de liquide 20. Pour se faire, le volant d'inertie 10 peut être mécaniquement connecté à un axe d'entraînement 12 lui-même relié mécaniquement à un système de roue libre 37 et de poulie 36 autour de laquelle s'enroule un câble 35 relié à l'ensemble lest/sac 30. La roue libre 37 est conformée de telle manière à ce que l'axe d'entraînement 12 soit entraîné en rotation lorsque le câble 35 se déroule sous l'effet de la chute de l'ensemble lest/sac 30 et pour que la poulie 36 soit libre en rotation vis-à-vis de l'axe d'entraînement 12 lorsque le câble est réenroulé autour de la poulie 36. Afin de permettre un arrêt d'urgence de l'installation, par exemple pour permettre une opération de maintenance par un technicien, l'axe d'entraînement, ou un autre élément solidaire en rotation du volant d'inertie, est préférentiellement muni d'un système de freinage d'urgence 39, tel que des freins à disques.

L'ensemble lest/sac 30 est agencé dans la colonne de liquide 20 en se déplaçant entre la portion inférieure de la colonne de liquide 20 dans laquelle le sac à gaz 32 est gonflé par insufflation de gaz fourni par le système d'insufflation de gaz et la portion supérieure dans laquelle le sac à gaz 32 relâche le gaz qu'il stocke. Le déplacement de l'ensemble lest/sac 30 de la portion supérieure vers la portion inférieure de la colonne de liquide 20 est obtenu par la force exercée par la gravité sur le lest 31 ceci avec une traînée réduite du fait que le sac à gaz 32 se retrouve dégonflé après avoir relâché le gaz. Ce déplacement ou chute de l'ensemble lest/sac entraîne avec lui le câble 35 et met en rotation la poulie, l'axe d'entraînement afin de transmettre l'énergie libérée pendant la chute au volant d'inertie 10.

En ce qui concerne le déplacement de l'ensemble lest/sac 30 de la portion inférieure vers la portion supérieure de la colonne de liquide 20 est obtenu sous l'effet de la poussée d'Archimède s'exerçant sur le sac à gaz une fois qu'il est gonflé par l'intermédiaire du système d'insufflation 40. Afin d'accompagner cette remontée de l'ensemble lest/sac 30, l'installation comprend un système pour rembobiner 38 le câble 35 sur la poulie 36 afin de rembobiner le câble 35 pendant la remontée de l'ensemble lest/sac 30. Dans le cadre de ce premier mode de réalisation, le système pour rembobiner 38 comprend à la fois un ressort à spiral qui, mis sous tension dans le cadre de la chute de l'ensemble lest/sac 30, permet un mécanisme d'entraînement de la poulie par le volant d'inertie qui est engagé uniquement pendant la remontée de l'ensemble lest/sac 30. Un tel ressort à spiral forme un élément de rappel élastique agencé de telle manière à être sollicité pendant la chute de l'ensemble lest/sac 30 à partir d'une profondeur dans la colonne de liquide 20 prédéterminée. On notera qu'un tel agencement peut être fourni par un système d'accouplement, non montré, apte à accoupler le ressort à spiral avec la poulie 36B avec le ressort lorsque l'ensemble lest/sac 30 atteint une profondeur donnée. Pour se faire, l'installation peut, selon une possibilité non illustrée, comprendre un capteur apte à détecter lorsque l'ensemble lest/sac 30 atteint une profondeur donnée dans la colonne de liquide et une unité de commande, relié audit capteur et qui est configuré pour commander le système d'accouplement afin d'accoupler le ressort à spiral avec la poulie 36B.

Bien entendu, l'installation selon l'invention peut mettre en œuvre des systèmes pour rembobiner 38 autres, tels qu'un moteur électrique, sans que l'on sorte du cadre de l'invention.

Outre le ressort à spiral du système pour rembobiner 38 et comme montré sur la figure 2, l'installation selon l'invention peut comprendre un dispositif de freinage de la chute de l'ensemble lest/sac 30 agencé dans la portion inférieure de la colonne de liquide. Dans le cadre de ce premier mode de réalisation, le dispositif de freinage de la chute de l'ensemble lest/sac peut comprendre un emplacement à section réduite 22 agencé dans la portion inférieure de la colonne de liquide. Cet emplacement de section réduite 22 est conformé pour recevoir l'ensemble lest/sac 30 et présente une section se réduisant graduellement de telle manière que lors de la chute de l'ensemble lest/sac 30, la pression exercée par l'eau sous la poussée de l'ensemble lest/sac 30 permet de ralentir la chute de ce dernier. Pour se faire, dans l'exemple schématisé sur la figure 2, il est prévu un ensemble de trois contenants 23 concentriques dont la section et la hauteur se réduisant en allant de l'extérieur vers l'intérieur. Le contenant 23 le plus central présente une ouverture légèrement supérieure à la projection verticale du lest 31 de manière que lors de l'arrivée du lest 31 dans ledit contenant 23, le liquide chassé par la chute du lest est un passage de taille réduite laissé par le lest 31 afin d'offrir une résistance maximale à la chute du lest.

Par ouverture légèrement supérieure à la projection verticale du lest 31 il est entendu ci-dessus et dans le reste de ce document que lors de son passage, sur toute la périphérie du lest 31, l'ouverture présente une distance minimale inférieure à 20 cm, préférentiellement à 10 cm voire à 5 cm.

Bien entendu, si dans le présent mode de réalisation, la section variable de l'emplacement 22 est fournie par l'intermédiaire de contenants 23 à section décroissante, il est parfaitement envisageable, en variante et sans que l'on sorte du cadre de l'invention, que ce soit la colonne de liquide 20 elle-même qui présente une section variable.

De même, en variante ou en complément à un tel emplacement à section variable, le dispositif de freinage de la chute de l'ensemble lest/sac 30 agencé peut comprendre un élément en matériau déformable pour absorber, par sa déformation, au moins une partie de l'énergie cinétique emmagasinée par l'ensemble lest/sac 30 tout au long de sa chute.

Comme précisé plus haut, le système d'insufflation 40 est adapté pour permettre de gonfler le sac à gaz en lui insufflant du gaz. Le système d'insufflation 40 comprend le turbo à gaz 41 qui est entrainé en rotation par le volant d'inertie afin de générer un flux de gaz, ici un flux d'air. Ce flux d'air, comme montré sur la figure 1, permet d'alimenter le réservoir 44 en gaz. Le flux d'air ainsi stocké dans le réservoir 44 est ensuite chauffé au moyen de l'unité de chauffage 42 afin d'en élever la pression, conformément à la loi des gaz parfaits (ou ses pendants que sont les lois de Gay Lussac, Boyle-Mariotte et de Charles). L'air ainsi élevé en température, et donc en pression, est délivré à un mécanisme d'insufflation d'air 43 tel que montré sur la figure 3. Pour permette une telle délivrance de gaz au mécanisme d'insufflation d'air 43 sans baisse significative de la température de l'air, cette délivrance peut se faire au moyen d'un tube 45 isolé. Cette isolation est préférentiellement obtenue par un tube 45 à double paroi avec l'espace défini entre les deux parois qui est préférentiellement sous un vide industriel, voire primaire.

Pour permettre l'insufflation d'air, le lest 31 peut par exemple présenter un orifice traversant débouchant dans le sac à gaz 32 et muni d'une valve 311 destinée à coopérer avec une valve complémentaire 431 du mécanisme d'insufflation 43 de telle manière que la valve 311 et la valve complémentaire 431 s'ouvrent pour libérer le gaz délivré à partir du réservoir 44 lorsqu'elles rentrent en contact l'une de l'autre après la chute de l'ensemble lest/sac 30. Bien entendu, dès qu'une quantité de gaz suffisante est introduite dans le sac à gaz 32 pour que la poussée d'Archimède s'exerçant sur le sac à gaz compense la force de gravité s'exerçant sur le lest 31 et que l'ensemble lest/sac 30 se déplace en direction de la portion supérieure de la colonne de liquide 20, la valve 311 et la valve complémentaire 431 se séparent et se referment.

L'unité de chauffage 42 peut comprendre un échangeur thermique 42A, tel qu'un échangeur thermique air/liquide afin de permettre d'échanger des calories d'un liquide caloporteur vers le gaz qui est stocké dans le réservoir. Le liquide caloporteur est lui-même chauffé à partir d'un système de récupération d'énergie 42B. Ce système de récupération d'énergie 42B pouvant être associé à une installation industrielle générant de la chaleur, tel qu'une aciérie ou un incinérateur de déchets, des panneaux thermiques ou encore une installation de géothermie.

La figure 3 montre également l'ouverture 321 prévue au niveau de la partie haute du sac à gaz 32 afin que le gaz/l'air stocké dans le sac à gaz 32 soit libéré lorsque le sac à gaz 32 atteint la portion haute de la colonne de liquide 20, cette portion supérieure étant préférentiellement une portion dans laquelle l'ouverture 321 du sac est émergée de manière à éviter toute rentrée de liquide dans le sac à gaz. Afin de permettre une telle ouverture, la portion supérieure de la colonne de liquide 20 est préférentiellement munie d'un organe, non montré, destiné à coopérer avec l'ouverture 321 afin de permettre une ouverture du sac à gaz 32. Cet organe est également adapté pour permettre une fermeture de ladite ouverture 321 lorsque le sac à gaz 32 a libéré le gaz qui y était stocké.

On notera que pour permettre l'inspection et/ou l'entretien du mécanisme d'insufflation, l'installation 1 peut comprendre une plateforme 21 sur laquelle est disposé le mécanisme d'insufflation 43, et éventuellement les contenants 23. L'installation 1 comprend en outre des câbles de relevage 211 pour permettre de relever la plateforme et le mécanisme d'insufflation 43 qu'elle supporte.

Afin de permettre une récupération de l'énergie cinétique stockée dans le volant d'inertie 10, l'installation 1 comprend un générateur d'électricité 50 susceptible d'être entrainé en rotation par le volant d'inertie 10. L'installation 1 peut ainsi comprendre un système d'accouplement/désaccouplement d'un rotor du générateur avec le volant d'inertie 10 de manière à permettre une génération d'électricité sur demande. Le générateur d'électricité 50 comprend une sortie afin de délivrer l'électricité au réseau de distribution d'électricité.

Une telle installation de stockage mécanique d'énergie et de génération d'électricité 1 est adaptée pour permettre la mise en œuvre d'un procédé de génération d'électricité sur demande à partir d'au moins une source d'énergie intermittente, le procédé comprenant les étapes suivantes :
- utilisation de la source d'énergie intermittente 2 en tant que source d'énergie extérieure pour entraîner au moins en partie en rotation le volant à inertie 10,
- génération d'électricité à partir du générateur d'électricité 50 entrainé en rotation par le volant à inertie 10.

L'électricité générée dans le cadre d'un tel procédé peut être injectée dans un réseau de distribution d'électricité, tel qu'un réseau général de distribution d'électricité ou celui d'un village isolé, d'une usine ou encore un équipement public tel qu'un hôpital.

Bien entendu, dans le cadre d'un tel procédé, il peut être prévu une étape d'initialisation à partir d'électricité prélevée sur le réseau de distribution d'électricité.

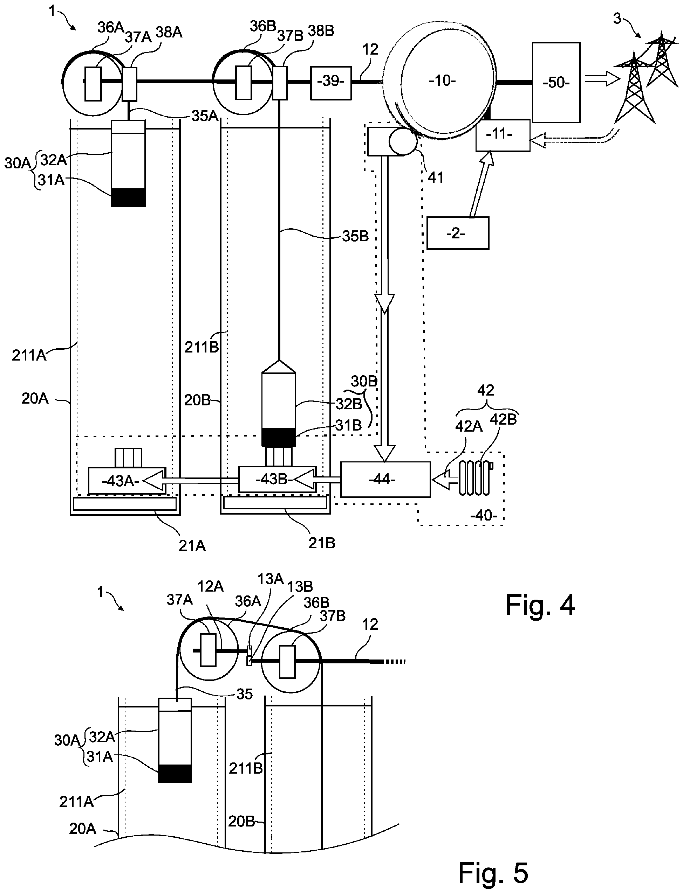

La figure 4 illustre une installation de stockage mécanique d'énergie et de génération d'électricité 1 selon un deuxième mode de réalisation dans lequel l'installation comprend deux ensembles lest/sac 30A, 30B agencés pour présenter des déplacements antagonistes.

Dans une telle configuration, l'installation comprend préférentiellement :
- une deuxième colonne de liquide 20B,
- un deuxième ensemble 30B comprenant un deuxième lest 31B et un deuxième sac à gaz 32B, ci-après deuxième ensemble lest/sac 30B, disposé dans la deuxième colonne de liquide 20B et agencé de telle manière à ce que la chute du deuxième lest 31B dans la deuxième colonne de liquide 20B entraîne en rotation le volant d'inertie 10, le deuxième sac à gaz 32B étant configuré pour relâcher un gaz qui y est stocké lorsque le deuxième ensemble lest/sac 30B atteint une portion supérieure de la deuxième colonne de liquide 20B.

Afin de permettre une alimentation en gaz du deuxième sac à gaz 32B, le système d'insufflation 40 comprenant en outre un deuxième mécanisme d'insufflation de gaz 43B configuré pour insuffler le flux de gaz chauffé dans le deuxième sac à gaz 32B lorsque le deuxième ensemble lest/sac 30B atteint une portion inférieure de la deuxième colonne de liquide 20B.

Afin de permettre un entraînement du volant d'inertie 10 par la chute du deuxième ensemble lest/sac 30B, l'installation comprend un deuxième câble 35B, une deuxième poulie 36B, une deuxième roue libre 37B et un deuxième système de rembobinage équipant la deuxième colonne 20B selon une configuration similaire à ceux équipant la colonne de liquide 20A. On notera en particulier que la deuxième poulie et la deuxième roue libre 37B sont agencées pour entraîner en rotation l'axe d'entraînement 12 pendant la chute du deuxième ensemble lest/sac 30B le long de la deuxième colonne 20B.

Comme indiqué ci-dessus, l'ensemble sac/lest 30A et le deuxième ensemble sac/lest 30b sont agencés pour présenter des déplacements antagonistes, c'est dire que le premier ensemble lest/sac 30A atteint la portion inférieure de l'au moins une colonne de liquide 20A lorsque le deuxième ensemble lest/sac 30B atteint la portion supérieure de la deuxième colonne de liquide 20B. Bien entendu, si un tel agencement est à préférer, il est également envisageable que l'ensemble sac/lest 30A et le deuxième ensemble sac/lest 30B présente des déplacements parallèles entre eux ou encore selon un décalage quelconque.

De même, dans le présent mode de réalisation, l'ensemble lest/sac 30A et le deuxième ensemble lest/sac 30B sont agencés respectivement dans la colonne de liquide 20A et la deuxième colonne de liquide 20B, il également envisageable sans que l'on sorte du cadre de l'invention que l'ensemble lest/sac 30A et le deuxième ensemble lest/sac 30B soient agencés dans une même colonne de liquide.

La figure 5 illustre une variante du deuxième mode de réalisation dans laquelle l'installation de stockage mécanique d'énergie et de génération d'électricité 1 comprend un unique câble 35 reliant le premier et le deuxième ensemble lest/sac 30A, 30B et entraînant en rotation à la fois la poulie 36A et la deuxième poulie 36B. Une installation selon cette variante se différencie d'une installation selon le deuxième mode de réalisation en ce qu'il n'est prévu qu'un unique câble 35 entraînant à la fois la poulie 36A et la deuxième poulie 36B et en ce qu'il est prévu un système de transmission adapté pour que l'axe d'entraînement 12 soit entrainé en rotation lorsque la poulie 36A tourne dans un sens et lorsque que la deuxième poulie 36B tourne dans un autre sens.

Ainsi comme le montre la figure 5, lorsque l'ensemble lest/sac 30A et le deuxième ensemble lest/sac 30B (non montré) sont tous deux reliés à l'unique câble 35 de telle manière que lorsque l'ensemble lest/sac 30A passe de la portion inférieure à la portion supérieure de la colonne de liquide, le deuxième ensemble lest/sac passe de la portion supérieure à la portion inférieure de la deuxième colonne de liquide. La poulie et la deuxième poulie 36A, 36B sont ainsi toutes deux entraînées lors des déplacements de l'ensemble lest/sac 30A et du deuxième ensemble lest/sac 30B. Afin de permettre une récupération de l'énergie libérée lors de la chute (i.e. passage de la portion supérieure vers la portion inférieure) de chacun de l'ensemble lest/sac 30A et du deuxième ensemble lest/sac 30B, la poulie 36A et la deuxième poulie 36B sont agencées chacune sur un axe respectif au moyen d'une roue libre respective 37A, 37B, la deuxième poulie 36B étant agencée en prise avec l'axe d'entraînement et la poulie 36A étant agencée en prise avec un axe secondaire 12A. L'axe d'entraînement 12 et l'axe secondaire 12A sont reliés l'un à l'autre avec un système de transmission d'inversion de sens de rotation, de telle manière que lorsque l'axe d'entraînement tourne dans le sens horaire, l'axe secondaire tourne dans le sens anti-horaire.

Comme montré sur la figure 5, un tel système de transmission d'inversion de sens de rotation peut par exemple être fourni par un premier et un deuxième engrenage 13A, 13B agencés pour s'engrener l'un avec l'autre, le premier engrenage 13A étant solidaire en rotation avec l'axe secondaire 12A et le deuxième engrenage 13B étant solidaire en rotation avec l'axe d'entraînement 12. Bien entendu, selon cette variante, chacune de la poulie et de la deuxième poulie est équipée d'une roue libre 37A, 37B respective.

Une telle variante du deuxième mode de réalisation, ne mettant en œuvre qu'un unique câble 35 entraîné par chacun de l'ensemble lest/sac 30A et du deuxième ensemble lest/sac 30B, elle permet de rendre inutile d'équiper l'installation 1 de systèmes de rembobinage câble 38A, 38B.

On notera de même, que si dans les présents modes de réalisation, chacune des colonnes est délimitée physiquement par un contenant, il est également envisageable, d'une manière non préférée, qu'une telle colonne de liquide ne soit pas délimitée physiquement par des parois, l'installation étant agencée dans un réservoir de liquide de plus grande dimension que celui-ci soit naturel ou artificiel.

On notera que si dans le cadre des présents modes de réalisation, le liquide de la colonne de liquide 20 et le gaz fourni par le système d'insufflation sont respectivement de l'eau et de l'air, il est bien entendu envisageable sans que l'on sorte du cadre de l'invention, que l'un ou l'autre soit d'un autre type. Ainsi par exemple, dans le cadre d'un aménagement d'une telle installation dans un milieu extérieur soumis à des températures inférieures à 0°C, il est parfaitement envisageable que le liquide comprenne un additif, tel que du glycol. De même, l'installation selon l'invention peut utiliser des gaz autres que de l'air, tels que par exemple des gaz de combustion d'un incinérateur de déchets.

### Nomenclature des dessins

1 installation de stockage mécanique d'énergie et de génération d'électricité ;
2 source d'énergie extérieure ;
3 réseau de distribution d'électricité ;
10 volant d'inertie ;
11 moteur;
12 axe d'entraînement ;
12A axe d'entraînement secondaire ;
13A premier engrenage ;
13B deuxième engrenage ;
20, 20A colonne de liquide ;
20B deuxième colonne de liquide ;
21, 21A plateforme ;
21B deuxième plateforme ;
211, 211A câbles de relevage ;
211B deuxièmes câbles de relevage ;
22 emplacement à section réduite ;
23 contenants;
30, 30A ensemble lest/sac;
30B deuxième ensemble lest/sac;
31, 31A lest ;
31B deuxième lest;
311 valve ;
32, 32A sac à gaz ;
32B deuxième sac à gaz ;
321 ouverture ;
35, 35A câble
35B deuxième câble ;
36, 36A poulie;
36B deuxième poulie ;
37, 37A roue libre ;
37B deuxième roue libre ;
38, 38A système pour rembobiner;
38B deuxième système pour rembobiner;
39 système de freinage d'urgence ;
40 système d'insufflation de gaz ;
41 turbo à gaz;
42 unité de chauffage ;
42A échangeur thermique;
42B système de récupération d'énergie ;
43, 43A mécanisme d'insufflation de gaz ;
43B deuxième mécanisme d'insufflation de gaz ;
431 valve complémentaire ;
44 réservoir;
45 tube;
50 générateur d'électricité.

## Revendications

1. Installation de stockage mécanique d'énergie et de génération d'électricité (1) comprenant :
- Au moins un volant d'inertie (10) apte à être entraîné en rotation par une source d'énergie extérieure (2) à l'installation,
- au moins une colonne de liquide (20, 20A, 20B),
- au moins un ensemble (30, 30A, 30B) comprenant un lest (31, 31A, 31B) et un sac à gaz (32, 32A, 32B), ci-après ensemble lest/sac (30, 30A, 30B), disposé dans la colonne de liquide (20, 20A, 20B) et agencé de telle manière à ce que la chute du lest (31, 31A, 31B) dans la colonne de liquide entraine en rotation le volant d'inertie (10), le sac à gaz (32) étant configuré pour relâcher un gaz qui y est stocké lorsque l'ensemble lest/sac (30, 30A, 30B) atteint une portion supérieure de la colonne de liquide (20, 20A, 20B),
- au moins un système d'insufflation de gaz (40) au moins partiellement agencé dans la colonne de liquide (20, 20A, 20B) et qui est configuré pour insuffler du gaz dans le sac à gaz (32, 32A, 32B) lorsque l'ensemble lest/sac (30, 30A, 30B) atteint une portion inférieure de la colonne de liquide (20, 20A, 20B),
- un générateur d'électricité (50) susceptible d'être entrainé en rotation par le volant d'inertie (10) pour générer de l'électricité,
dans lequel le système d'insufflation (40) comprend :
- un turbo à gaz (41) entraîné en rotation par le volant d'inertie (10) et configuré pour fournir un flux de gaz,
- une unité de chauffage (42) configurée pour élever la température du flux de gaz fourni par le turbo à gaz (41),
- au moins un mécanisme d'insufflation de gaz (43, 43A, 43B) configuré pour insuffler le flux de gaz chauffé dans le sac à gaz (32, 32A, 32B) lorsque l'ensemble lest/sac (30, 30A, 30B) atteint une portion inférieure de la colonne de liquide (20, 20A, 20B).

2. Installation de stockage mécanique d'énergie et de génération d'électricité (1) selon la revendication 1, dans laquelle le système d'insufflation (40) comprend en outre un réservoir (44) pour recevoir le flux de gaz et le stocker avant d'être insufflé par le mécanisme d'insufflation de gaz (43 ; 43A, 43B) et dans lequel l'unité de chauffage (42) est configurée pour élever la température du gaz stocké dans le réservoir (44) qui est formé par le flux de gaz.

3. Installation de stockage mécanique d'énergie et de génération d'électricité (1) selon la revendication 1 ou 2, dans laquelle l'unité de chauffage (42) comprend un échangeur thermique (42A), tel qu'un échangeur thermique gaz/liquide.

4. Installation de stockage mécanique d'énergie et de génération d'électricité (1) selon l'une quelconque des revendications 1 à 3, dans laquelle le volant d'inertie (10) est logé dans une enceinte sous vide au moins industriel, voire un vide primaire.

5. Installation de stockage mécanique d'énergie et de génération d'électricité (1) selon l'une quelconque des revendications 1 à 4, dans laquelle la colonne de liquide (20, 20A, 20B) présente un emplacement à section réduite (22), ledit emplacement à section réduite (22) étant agencé dans la portion inférieure de la colonne de liquide et étant destiné à recevoir l'ensemble lest/sac (30, 30A, 30B) à la fin de sa chute.

6. Installation de stockage mécanique d'énergie et de génération d'électricité (1) selon l'une quelconque des revendications 1 à 5, dans laquelle l'ensemble lest/sac (30, 30A, 30B) est relié au volant d'inertie à partir d'un câble (35, 35A, 35B) et d'une roue libre (36, 36A, 36B) et dans lequel il est prévu un élément de rappel élastique agencé de telle manière à être sollicité pendant la chute de l'ensemble lest/sac (30, 30A, 30B) à partir d'une profondeur dans la colonne de liquide (20, 20A, 20B) prédéterminée, ledit élément de rappel élastique étant préférentiellement un ressort à spiral.

7. Installation de stockage mécanique d'énergie et de génération d'électricité (1) selon l'une quelconque des revendications 1 à 6 comprenant en outre :
- au moins un deuxième ensemble (30B) comprenant un deuxième lest (31B) et un deuxième sac à gaz (32B), ci-après deuxième ensemble lest/sac (30B), disposé dans l'au moins une colonne de liquide (20B) et agencé de telle manière à ce que la chute du deuxième lest (31B) dans l'au moins une colonne de liquide (20B) entraine en rotation le volant d'inertie (10), le deuxième sac à gaz (32B) étant configuré pour relâcher un gaz qui y est stocké lorsque le deuxième ensemble lest/sac (30B) atteint une portion supérieure de l'au moins une colonne de liquide (20B),
le système d'insufflation (40) comprenant en outre un deuxième mécanisme d'insufflation de gaz (43B) configuré pour insuffler le flux de gaz chauffé dans le deuxième sac à gaz (32B) lorsque le deuxième ensemble lest/sac (30B) atteint une portion inférieure de l'au moins une colonne de liquide (20B),
l'installation comprenant préférentiellement en outre au moins une deuxième colonne de liquide (20B), l'ensemble lest/sac (30A) étant logé dans la colonne de liquide (20A) et le deuxième ensemble lest/sac (30B) étant logé dans la deuxième colonne de liquide (20B).

8. Installation de stockage mécanique d'énergie et de génération d'électricité (1) selon la revendication 7, dans laquelle l'ensemble lest/sac (30A) et le deuxième ensemble lest/sac (30B) sont agencés dans l'au moins une colonne de liquide (20A, 20B) de manière que le premier ensemble lest/sac (30A) atteigne la portion inférieure de l'au moins une colonne de liquide (20A) lorsque le deuxième ensemble lest/sac (30B) atteint la portion supérieure de l'au moins une colonne de liquide (20B).

9. Procédé de génération d'électricité sur demande à partir d'au moins une source d'énergie intermittente mettant en œuvre une Installation de stockage mécanique d'énergie et de génération d'électricité selon l'une quelconque des revendications 1 à 8, le procédé comprenant les étapes suivantes :
- utilisation de la source d'énergie intermittente (2) en tant que source d'énergie extérieure pour entraîner au moins en partie en rotation le volant à inertie (10),
- génération d'électricité à partir du générateur d'électricité (50) entrainé en rotation par le volant à inertie (10).

10. Procédé de génération d'électricité sur demande selon la revendication 9 dans lequel la source d'énergie intermittente comprend une source d'énergie renouvelable préférentiellement sélectionnée dans le groupe comprenant les sources d'énergie solaire, les sources d'énergie éolienne, les sources d'énergie marémotrice et les sources d'énergie hydrolienne.
